**Europäisches Patentamt**

**European Patent Office**

**Office européen des brevets**

(19)

(11) Veröffentlichungsnummer: **0 215 233 B1**

# EUROPÄISCHE PATENTSCHRIFT

(12)

(45) Veröffentlichungstag der Patentschrift: **13.02.91**

(51) Int. Cl.5: **G01B 5/00, F16P 7/02**

(21) Anmeldenummer: **86109920.8**

(22) Anmeldetag: **19.07.86**

---

(54) **Schutzeinrichtung einer Zustelleinheit.**

---

(30) Priorität: **25.07.85 DE 3526633**

(43) Veröffentlichungstag der Anmeldung:
**25.03.87 Patentblatt 87/13**

(45) Bekanntmachung des Hinweises auf die
Patenterteilung:
**13.02.91 Patentblatt 91/07**

(84) Benannte Vertragsstaaten:
**DE FR GB IT**

(56) Entgegenhaltungen:
**WO-A-84/03349**
**DE-C- 3 527 063**
**FR-A- 2 555 734**
**GB-A- 1 349 230**

**PATENT ABSTRACTS OF JAPAN, Band 7, Nr.**
**121 (P-199)[1266], 25. Mai 1983; & JP-A-58 38**
**803 (MITSUTOYO SEISAKUSHO K.K.)**
**07-03-1983**

(73) Patentinhaber: **Mauser-Werke Oberndorf**
**GmbH**
**Teckstrasse 11**
**D-7238 Oberndorf(DE)**

(72) Erfinder: **Gruhler, Siegfried**
**Sigmarswanger Strasse 3**
**D-7243 Vöhringen 2(DE)**

(74) Vertreter: **Hofmann, Gerhard, Dipl.-Ing. Paten-**
**tassessor et al**
**Stephanstrasse 49**
**D-8500 Nürnberg(DE)**

---

**Beschreibung**

Die Erfindung betrifft eine Schutzeinrichtung einer Pinole einer Meßmaschine oder einer Montagemaschine nach dem Oberbegriff des Patentanspruches 1.

Eine Pinole einer Meßmaschine wird in Richtung auf das zu vermessende Werkstück verfahren. Es ist dabei nicht ausgeschlossen, daß der Mantel der Pinole an dem Werkstück anstößt und die Pinole dadurch verstellt oder beschädigt wird. In der Praxis ist als Schutz hiergegen der Mantel von einem federnden Schutzschild umgeben. Berührt diese das Werkstück, dann soll die weitere Bewegung der Pinole abgeschaltet werden. Bekannte Schutzeinrichtungen arbeiten mit beträchtlichen Verzögerungen, so daß trotz des Schutzschildes Störungen auftreten können.

Aus der FR-A 2 555 734 ist eine Schutzeinrichtung für einen vertikal bewegbaren Schlitten einer Meßmaschine bekannt. Die Schutzeinrichtung besteht aus übereinander angeordneten Ringen um den Schlitten, die an vier Seiten aufgefädelt sind. Die Ringe werden durch Blattfedern auf seitlichen Abstand zum Schlitten gehalten.

Aufgabe der Erfindung ist es, eine Schutzeinrichtung vorzuschlagen, die mit sehr kurzen Verzögerungszeiten arbeitet, und dadurch die Verfahrbewegung der Pinole beim Anstoßen an ein Hindernis sofort stoppt.

Erfindungsgemäß ist obige Aufgabe bei einer Schutzeinrichtung dadurch gelöst, daß jeder Druckfeder ein Schaltglied zugeordnet ist, das von der Druckfeder über ein Halteelement gegen die Kraft einer Schaltfeder in einer ersten Schaltlage gehalten ist, und daß bei einer den Zwischenraum zwischen Schutzschild und Mantel verkleinernden Relativbewegung das Halteelement das Schaltglied freigibt, wobei die Schaltfeder dieses in eine zweite Schaltlage bringt.

Stößt der Schutzschild bei einem Verfahren der Pinole an einen Gegenstand an, dann entspannt sich das Halteelement und das Schaltglied gelangt in seine zweite Schaltlage, die zum sofortigen Abschalten oder Umschalten der Bewegung der Zustelleinheit oder Umschalten der Bewegung der Zustelleinheit ausgewertet wird. Das Anstoßen wird dabei direkt in einen Schalthub des Schaltgliedes umgesetzt. Da der Schalthub klein sein kann, erfolgt das Schalten praktisch sofort beim Anstoßen. Es treten also zwischen dem Anstoßen und dem Schalten keine längeren Verzögerungszeiten auf.

Vorteilhafte Ausgestaltungen der Erfindung ergeben sich aus den Unteransprüchen und der folgenden Beschreibung von Ausführungsbeispielen. In der Zeichnung zeigen:

Figur 1 eine Pinole in Seitenansicht mit einer Schutzeinrichtung,

Figur 2 eine vergrößerte Teilansicht der Figur 1 und

Figur 3 eine vergrößerte Teilansicht entsprechend Figur 2 eines anderen Ausführungsbeispieles.

An einer Pinole 1 sind im unteren Bereich 2 mehrere Druckfedern 3 am Umfang verteilt angeordnet. Die Druckfedern 3 verlaufen radial zur Achse 4 der Pinole 1. Die Druckfedern 3 stützen ein Schutzschild 5 ab, der den Pinolenumfang umschließt. Die Form des Schutzschildes 5 läßt sich leicht an die räumlichen Gegebenheiten anpassen.

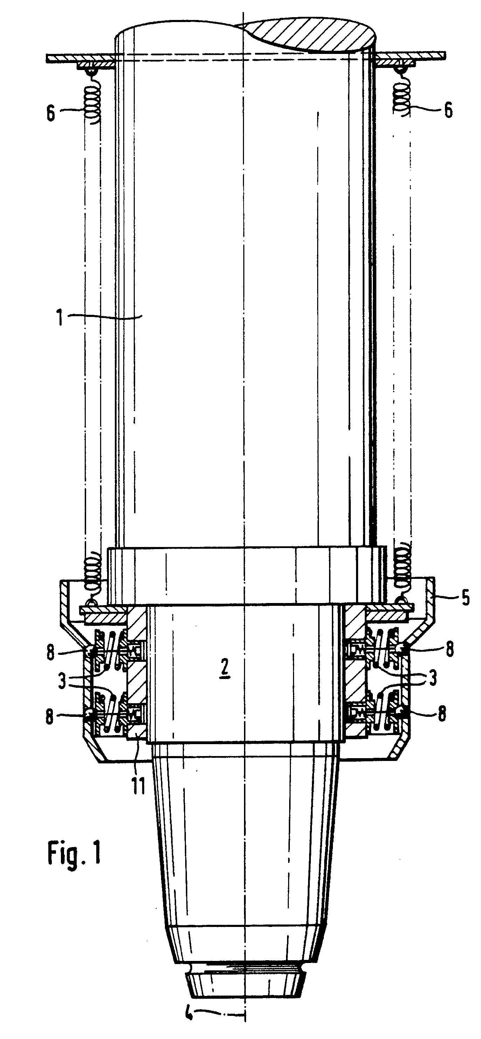

Beim Ausführungsbeispiel nach Figur 1 erstreckt sich der Schutzschild 5 nur um den unteren Bereich 2 der Pinole 1. Oberhalb des Schutzschildes 5 ist die Pinole 1 von mehreren Lichtschranken 6 umschlossen. Bei hinreichend leichter Bauweise kann sich der Schutzschild 5 auch um den oberen Bereich der Pinole 1 erstrecken. Das Gewicht des Schutzschildes 5 kann von einem nicht näher dargestellten elastischen Träger aufgenommen sein. Der Schutzschild 5 kann jedoch auch von den Druckfedern 3 selbst getragen sein.

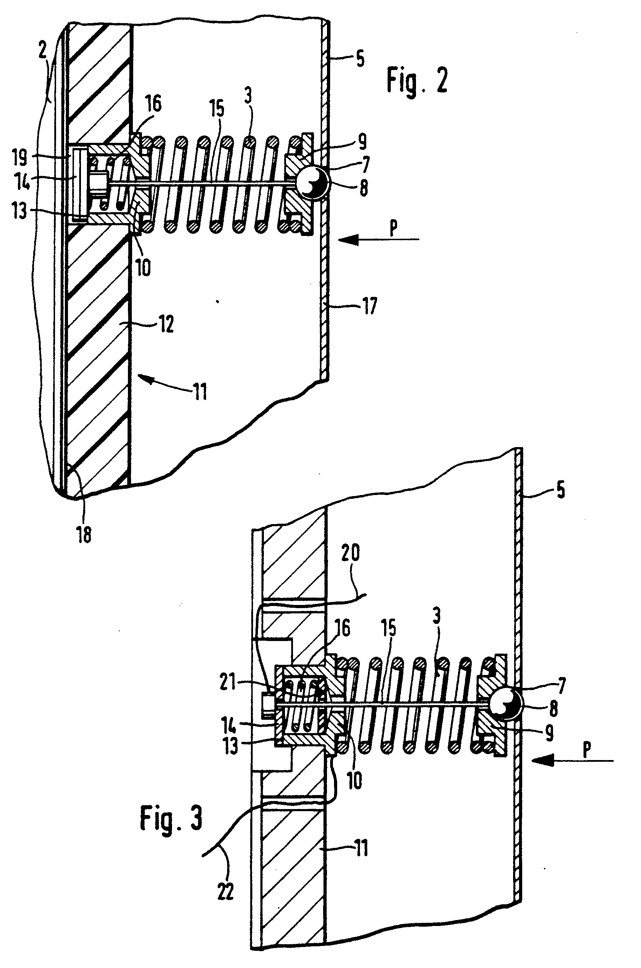

Der Schutzschild 5 weist Bohrungen 7 auf. In jeder Bohrung 7 stützt sich eine Kugel 8 ab, die in einer Höhlung eines Trägers 9 sitzt. Am Träger 9 steht das eine Ende der Druckfeder 3 an, deren anderes Ende sich an einer Hülse 10 abstützt. Die Hülse 10 ist in einen Mantel 11 eingesetzt, der beim Ausführungsbeispiel nach Figur 2 mit einer elektrisch isolierenden Hülle 12 umschlossen ist.

Auf dem der Druckfeder 3 abgewandten Ringrand 13 der Hülse 10 sitzt ein scheibenförmiges Schaltglied 14 auf. Dieses ist mit einem von einem Draht 15 gebildeten Halteelement verbunden. Der Draht 15 ist an der Kugel 8 befestigt. Er verläuft in der Mittelachse der Druckfeder 3. In der Hülse 10 ist eine Schaltfeder 16 angeordnet, die auf das Schaltglied 14 drückt, deren Federkraft jedoch kleiner als die der Druckfeder 3 ist.

Im Ausführungsbeispiel nach Figur 2 ist ein Schließerkontakt dargestellt, wobei den einen Schalterpol 17 der Schutzschild 5 und den anderen Schalterpol 18 ein elektrisch leitender Belag des Mantels 11 bilden. Zwischen dem Schutzschild 5 und dem Schaltglied 14 besteht über die Kugel 8 und den Draht 15 und gegebenenfalls auch über den Träger 9, die Druckfeder 3, die Hülse 10 und die Schaltfeder 16 eine elektrisch leitende Verbindung. Die Hülse 10 ist mittels der Hülle 12 gegenüber dem den zweiten Schalterpol 18 bildenden Belag elektrisch isoliert. In der in Figur 2 dargestellten Ruhestellung besteht zwischen dem Schaltglied 14 und dem zweiten Schalterpol 18 ein kleiner Abstand 19 (Schalthub).

Stößt der Schutzschild 5 bei einem Verfahren der Pinole 1 an einem Werkstück an, dann wird er beispielsweise in Richtung des Pfeiles P beauf-

schlägt. Dadurch wird der bis dahin von der Druckfeder 3 gespannt gehaltene Draht 15 entlastet, so daß nun die Schaltfeder 16 das Schaltglied 14 auf den Schalterpol 18 drückt. Damit ist eine elektrische Verbindung zwischen den Schalterpolen 17 und 18 geschaffen. Dies wird zum sofortigen Abschalten oder Umschalten des Pinolenantriebs ausgewertet.

Erfolgt die Kollision des Schutzschildes 5 mit einem Werkstück in entgegengesetzter Richtung, dann schließen die den linksseitigen Druckfedern 3 (vgl. Figur 1) zugeordneten Schalteinrichtungen. Da also je nach der Kollisionsrichtung unterschiedliche Schalter ansprechen, kann die Kollisionsrichtung elektrisch einfach erkannt und für entsprechende Umschaltvorgänge ausgewertet werden. Gelangt ein Gegenstand in den Bereich der Lichtschranken 6, führt dies ebenfalls zu einem entsprechenden Schalten des Pinolenantriebes.

Das Ausführungsbeispiel nach Figur 3 arbeitet als Öffnerkontakt. Die Hülse 10 ist mit einem ersten, von einem elektrischen Leiter gebildeten Schalterpol 22 verbunden. Das Schaltglied 14 ist mit einem zweiten, von einem elektrischen Leiter gebildeten Schalterpol 20 verbunden. Die Schaltfeder 16 ist mittels einer elektrisch nichtleitenden Scheibe 21 gegen die Hülse 10 isoliert. Bei der in Figur 3 dargestellten Ruhestellung ist die elektrische Verbindung zwischen den Schalterpolen 22 und 20 über den Ringrand 13 geschlossen.

Wird der Schutzschild 5 bei einem Anstoßen in Richtung des Pfeiles P versetzt, dann entspannt sich der Draht 15, so daß die Schaltfeder 16 das Schaltglied 14 vom Ringrand 13 abhebt, wodurch die elektrische Verbindung der Schalterpole 19 und 20 getrennt ist. Dies wird zur Auslösung der gewünschten Schaltvorgänge ausgewertet.

Die beschriebenen, aus den Teilen 8 bis 10, 13 bis 16 und 21 bestehenden Schalteinrichtungen lassen sich als Baueinheiten vorfertigen. Sie lassen sich dann einfach an der Pinole montieren. Der Schutzschild ist danach einfach aufzuschieben, wobei in dessen Bohrungen 7 die Kugeln 8 rasten.

Wegen des fast verzögerungsfreien Ansprechens der Schalteinrichtung bei einem Anstoßen, braucht der Abstand zwischen dem Schutzschild 5 und dem Mantel 11, 12 nicht sehr groß zu sein. Die Schutzeinrichtung läßt sich dadurch kompakt aufbauen.

**Ansprüche**

1. Schutzeinrichtung einer Pinole (1) einer Meßmaschine oder einer Montagemaschine, bestehend aus einem den Mantel (11,12) der Pinole (1) umgebenden, federnden Schutzschild (5), der mittels mehrerer Druckfedern (3) am Mantel (11,12) abgestützt ist, dadurch gekennzeichnet, daß jeder Druckfeder (3) ein Schaltglied (14) zugeordnet ist, das von der Druckfeder (3) über ein Halteelement (15) gegen die Kraft einer Schaltfeder (16) in Einer ersten Schaltlage gehalten ist, und daß bei einer den Zwischenraum zwischen dem Schutzschild (5) und dem Mantel (11,12) verkleinernden Relativbewegung das Halteelement (15) das Schaltglied (14) freigibt, wobei die Schaltfeder (16) dieses in eine zweite Schaltlage bringt.

2. Schutzeinrichtung nach Anspruch 1, dadurch gekennzeichnet, daß das Halteelement von einem Draht (15) gebildet ist, der einerseits am Schaltglied (14) und andererseits an einem Träger (9) am dem Schaltglied (14) abgewandten Ende der Druckfeder (3) festliegt, und daß der Draht (15) von der Druckfeder (3) in der ersten Schaltlage gespannt gehalten ist.

3. Schutzeinrichtung nach Anspruch 1 oder 2, dadurch gekennzeichnet, daß das dem Schaltglied (14) zugewandte Ende der Druckfeder (3) sich an einer Hülse (10) abstützt, in der die Schaltfeder (16) angeordnet ist, wobei das Schaltglied (14) in der ersten Schaltlage auf einem Ringrand (13) der Hülse (10) aufsitzt.

4. Schutzeinrichtung nach Anspruch 3, dadurch gekennzeichnet, daß die Hülse (10) im Mantel (11,12) sitzt.

5. Schutzeinrichtung nach Anspruch 2, dadurch gekennzeichnet, daß der Draht (15) an einer Kugel (8) befestigt ist, die in einer Höhlung des Trägers (9) liegt und sich in einer Bohrung (7) des Schutzschildes (5) abstützt.

6. Schutzeinrichtung nach Anspruch 2 oder 5, dadurch gekennzeichnet, daß der Draht (15) in der Achse der Druckfeder (3) und der Schaltfeder (16) verläuft.

7. Schalteinrichtung nach den Ansprüchen 1, 3 und 4, dadurch gekennzeichnet, daß der Schutzschild (5) einen ersten elektrischen Schalterpol (17) und ein Belag des Mantels (11,12) den zweiten elektrischen Schalterpol (18) eines Schließkontaktes bilden, und daß die Hülse (10) gegenüber dem zweiten elektrischen Schalterpol (18) elektrisch isoliert ist.

8. Schutzeinrichtung nach den Ansprüchen 3, 4 und 7,
dadurch gekennzeichnet,
daß die Hülse (10) einen ersten elektrischen Schalterpol (19) und das Schaltglied (14) einen zweiten elektrischen Schalterpol (20) eines Öffner kontaktes bilden, und daß die Schaltfeder (16) gegenüber der Hülse (10) elektrisch isoliert ist.

## Claims

1. Protective device of a sleeve (1) of a measuring machine or an assembly machine, consisting of a resilient protective shield (5) surrounding the casing (11, 12) of the sleeve (1), which shield is supported on the casing (11, 12) by means of several compression springs (3), characterised in that associated with each compression spring (3) is a switching member (14), which is held by the compression spring (3) by way of a holding member (15) against the force of a switch spring (16) in a first switching position, and that at the time of a relative movement reducing the gap between the protective shield (5) and the casing (11, 12), the holding member (15) releases the switching member (14), the switch spring (16) bringing the latter into a second switching position.

2. Protective device according to Claim 1, characterized in that the holding member is formed by a wire (15), which at one side is fixed to the switching member (14) and at the other side is fixed to a support (9) at the end of the compression spring (3) remote from the switching member (14), and that the wire (15) is held taut in the first switching position by the compression spring (3).

3. Protective device according to Claim 1 or 2, characterised in that the end of the compression spring (3) facing the switching member (14) is supported on a socket (10), in which the switch spring (16) is located, in the first switching position, the switching member (14) being seated on an annular edge (13) of the socket (10).

4. Protective device according to Claim 3, characterised in that the socket (10) is seated in the casing (11, 12).

5. Protective device according to Claim 2, characterized in that the wire (15) is fastened to a ball (8), which lies in a recess in the support (9) and is supported in a bore (7) of the protective shield (5).

6. Protective device according to Claim 2 or 5, characterised in that the wire (15) extends along the axis of the compression spring (3) and the switch spring (16).

7. Protective device according to Claims 1, 3 and 4, characterised in that the protective shield (5) forms a first electrical switch pole (17) and a covering of the casing (11, 12) forms the second electrical switch pole (18) of a closing contact, and that the socket (10) is electrically insulated with respect to the second electrical switch pole (18).

8. Protective device according to Claims 3, 4 and 7, characterised in that the socket (10) forms a first electrical switch pole (19) and the switching member (14) forms a second electrical switch pole (20) of an opening contact, and that the switch spring (16) is electrically insulated with respect to the socket (10).

## Revendications

1. Dispositif de protection d'un pointeau (1) pour une machine de mesure ou une machine de montage, se composant d'un écran de protection (5) élastique entourant l'enveloppe (11,12) du pointeau (1), prenant appui sur l'enveloppe (11,12), au moyen de plusieurs ressorts de pression (3), caractérisé en ce qu'à chaque ressort de pression (3) est associé un organe de commutation (14), qui est maintenu par le ressort de pression (3), par l'intermédiaire d'un élément de maintien (15), contre la force d'un ressort de commutation (16) dans une première position de commutation, et en ce que l'élément de maintien (15) libère l'organe de commutation (14), par un mouvement relatif réduisant l'espace intermédiaire existant entre l'écran de protection (5) et l'enveloppe (11,12), le ressort de commutation (16) amenant l'organe de commutation (14) dans une deuxième position de commutation.

2. Dispositif de protection selon la revendication 1, caractérisé en ce que l'élément de maintien est formé par un fil métallique (15) qui est fixé d'un côté sur l'organe de commutation (14) et de l'autre côté sur un support (9), sur l'extrémité du ressort de pression (3) opposée à l'organe de commutation (14), et que le fil métallique (15) est maintenu tendu dans la première position de commutation, par le ressort de pression (3) .

3. Dispositif de protection selon la revendication 1 ou 2, caractérisé en ce que l'extrémité du ressort de pression (3) qui est tournée vers l'organe de commutation (14) prend appui sur une douille (10) dans laquelle est disposé le ressort de commutation (16), l'organe de commutation (14) prenant appui, dans la première position de commutation, sur une bordure annulaire (13) de la douille (10).

4. Dispositif de protection selon la revendication 3, caractérisé en ce que la douille (10) repose dans l'enveloppe (11,12).

5. Dispositif de protection selon la revendication 2, caractérisé en ce que la fil métallique (15) est fixé sur une bille (8) qui repose dans une cavité du support (9) et prend appui dans un trou (7) de l'écran de protection (5).

6. Dispositif de protection selon la revendication 2 ou 5, caractérisé en ce que le fil métallique (15) s'étend dans l'axe du ressort de pression (33) et du ressort de commutation (16).

7. Dispositif de protection selon la revendication 1, 3 et 4, caractérisé en ce que l'écran de protection (5) forme un premier pôle électrique de contact (17) et qu'un revêtement de l'enveloppe (11,12) forme le deuxième pôle électrique de contact (18) d'un contact de fermeture, et que la douille (10) est isolée électriquement par rapport au deuxième pôle électrique de contact (18).

8. Dispositif de protection selon la revendication 3, 4 et 7, caractérisé en ce que la douille (10) forme un premier pôle électrique de contact (19) et que l'organe de commutation (14) forme le deuxième pôle électrique de contact (20) d'un contact, et que le ressort de commutation (16) est isolée électriquement par rapport à la douille (10).

Fig. 1

Fig. 2

Fig. 3